# EUROPÄISCHE PATENTANMELDUNG

(11) **EP 0 867 400 A2**
(43) Veröffentlichungstag der Anmeldung: **30.09.1998**
(21) Anmeldenummer: 98104994.3
(22) Anmeldetag: 19.03.1998
(51) Int. Cl.: B66F 7/28, B65G 67/20

(54) **Ladeeinrichtung**

(30) Priorität: 24.03.1997 DE 19712289
(71) Anmelder: Fahrion, Otmar, 70806 Kornwestheim (DE)
(72) Erfinder: Fahrion, Otmar, 70806 Kornwestheim (DE)
(74) Vertreter: Ostertag, Reinhard

(57) **Zusammenfassung**

Eine Einrichtung (10) zum Laden und Entladen von Stückgut (100) umfaßt einen verfahrbaren Stückgutschieber (14) und einen auf dem Stückgutschieber (14) verfahrbaren Abstreifer (24). Zum Beladen einer Ladefläche (60) werden der Stückgutschieber (14) mit dem Stückgut (100) und der Abstreifer (24) auf die Ladefläche (60) verfahren. Dann wird bei ruhendem Abstreifer (24) der Stückgutschieber (14) zurückgezogen, bis das Stückgut vollständig vom Stückgutschieber (14) abgestreift ist und auf der Ladefläche (60) steht. Zum Entladen wird das Stückgut (100) durch den Abstreifer (24) leicht von der Ladeeinrichtung (10) angehoben, so daß ein Spalt (104) unter dem Stückgut (100) gebildet wird. In diesen Spalt (104) wird der Stückgutschieber (14) ausgefahren, bis das Stückgut (100) vollständig auf dem Stückgutschieber (14) steht. Dann wird der Stückgutschieber (14) mit dem Abstreifer (24) und dem Stückgut (100) von der Ladefläche (60) herunterbewegt.

## Beschreibung

Die Erfindung betrifft eine Einrichtung zum Laden und Entladen von Stückgütern gemäß dem Oberbegriff des Anspruchs 1.

Eine bekannte Ladeeinrichtung ist z.B. ein Gabelstapler, welcher zum Beladen der Ladefläche eines Lastwagens mit seiner Gabel unter eine Palette fährt und diese anschließend hochhebt. Dann fährt er mit der Palette bis an den Rand der Ladefläche des Lastwagens und setzt die Ladung im Randbereich der Ladefläche des Lastwagens ab. Von dort wird sie dann manuell z.B. mit Hubwagen an den gewünschten Ort innerhalb des Laderaumes verbracht. Voraussetzung ist allerdings, daß das Stückgut auf seiner Unterseite so ausgebildet ist, daß die Gabel des Gabelstaplers und des Hubwagens sich darunter schieben kann.

Nachteilig bei einem Gabelstapler ist, daß im allgemeinen die Stückgüter nur einzeln bewegt werden können. Somit dauert das Beladen mit einem Gabelstapler relativ lange.

Der Erfindung liegt daher die Aufgabe zugrunde, eine Ladeeinrichtung zu schaffen, welche mehrere Stückgüter gleichzeitig verfrachten kann, und ein entsprechendes Ladeverfahren anzugeben.

Diese Aufgabe wird erfindungsgemäß gelöst durch eine Einrichtung mit den im Anspruch 1 gegebene Merkmalen und durch ein Verfahren mit den im Anspruch 16 gegebenen Merkmalen.

Durch eine erfindungsgemäße Ladeeinrichtung und das entsprechende Verfahren ist es möglich, mehrere Stückgüter gleichzeitig auf eine Ladefläche zu verfrachten und hierdurch den Beladevorgang erheblich abzukürzen. Auch ein Entladen der Ladefläche ist mit der angegebenen Einrichtung möglich.

Vorteilhafte Weiterbildungen der Erfindung sind in Unteransprüchen angegeben.

Die Weiterbildung der Erfindung gemäß Anspruch 2 ermöglicht es, die Antriebsmotoren vom Stückgutschieber bzw. vom Abstreifer entfernt anzubringen. Hierdurch ist z.B. eine platzsparende und geschützte Unterbringung im Inneren der Einrichtung möglich. Außerdem verbleibt bei der Verwendung von Ketten eine Stützfläche auf dem den Stückgutschieber bzw. den Abstreifer abstützenden Teil der Einrichtung, welche frei von Erhebungen ist. Hierdurch wird das Beladen der Einrichtung vereinfacht.

Nach Anspruch 3 umfaßt die Ladeeinrichtung Ketten mit Kettengliedern, welche knicksteif miteinander verbindbar sind und somit auch Druckkräfte übertragen können. Hierdurch kann auf eine umlaufende Kette mit Rücklauftrum und Umlenkrad, die hoch baut, verzichtet werden.

Durch die Weiterbildung nach Anspruch 4 wird einerseits eine sichere mechanische Verriegelung der Kettenglieder erzielt. Durch ein Verschieben der Verriegelungsstifte kann andererseits die Verriegelung der Kette z.B. im Bereich von Umlenk- oder Antriebsrädern aufgehoben werden.

Die Weiterbildung nach Anspruch 5 ermöglicht ein einfaches zwangsweises Verschieben der Verriegelungsstifte in Bereichen, in denen eine Krümmung der Ketten benötigt wird.

Eine besonders einfache knicksteife Verbindung kann durch die Weiterbildung gemäß Anspruch 6 erzielt werden. Diese Weiterbildung kann auch zusätzlich bei der Einrichtung nach Anspruch 4 verwendet werden.

Die Weiterbildung gemäß Anspruch 7 schafft einen leistungsstarken Antrieb und ist besonders bei der Bewegung schwerer Güter von Vorteil.

Eine Verstellbarkeit der Plattform gemäß Anspruch 8 ist dann von Vorteil, wenn der Lastwagen nicht exakt an eine Soll-Position der Ladestelle heranfahren kann. Bei weiter seitlicher Verstellbarkeit kann eine Ladeeinrichtung durch seitliches Verfahren, z.B. auf Schienen, an verschiedenen Ladestationen verwendet werden.

Die Höhenverstellbarkeit der Plattform gemäß Anspruch 9 und ihre Drehbarkeit gemäß Anspruch 10 machen ein zeitraubendes Ausrichten eine Lastwagens auf die Ladeeinrichtung unnötig.

Wenn Abstreifer oder/und Stückgutschieber gemäß Anspruch 11 geführt sind, ist ein besonders sicherer Betrieb der Ladeeinrichtung möglich, da ein seitliches Verrutschen des Abstreifers bzw. des Stückgutschiebers verhindert wird.

Die Weiterbildungen gemäß den Ansprüchen 12 und 13 ermöglichen ein leichtes Verfahren des Stückgutschiebers auch über Unebenheiten auf der Ladefläche des Lastwagens hinweg.

Die gemäß Anspruch 14 an der Vorderseite des Abstreifers ausgebildeten keilförmigen Nasen ermöglichen es auf besonders einfache Weise, die Stückgüter mindestens an der dem Stückgutschieber zugewandten Seite beim Entladen leicht zu anzuheben, so daß der Stückgutschieber unter die Stückgüter geschoben werden kann.

Die Weiterbildung nach Anspruch 15 ermöglicht das Anheben auch schwerer Stückgüter, so daß der Stückgutschieber beim Entladen unter die Stückgüter verfahren werden kann.

Durch ein Verfahren nach Anspruch 16 wird ein einfaches Aufladen von Stückgütern auf eine Ladefläche und einfaches Entladen von Stückgütern von einer Ladefläche ermöglicht.

Nachstehend wird die Erfindung anhand eines Ausführungsbeispiels unter Bezugnahme auf die Zeichnung näher erläutert. In dieser zeigen:
- Figur 1:: eine schematische Darstellung wichtiger Elemente einer Ladeeinrichtung,
- Figur 2:: eine Seitenansicht der Ladeeinrichtung und einer Ladefläche eines Lastwagens zu einem Zeitpunkt vor dem Ausfahren eines Stückgutschiebers auf die Ladefläche,
- Figur 3:: eine Draufsicht auf die Ladeeinrichtung entsprechend Figur 2,
- Figur 4:: eine Seitenansicht ähnlich zu Figur 2 zu einem Zeitpunkt nach dem Ausfahren des Stückgutschiebers auf die Ladefläche,
- Figur 5:: eine Seitenansicht ähnlich zu Figur 2 zu einem Zeitpunkt nach dem Abstreifen von Stückgütern,
- Figur 6:: eine vergrößerte Seitenansicht ähnlich zu Figur 2 zu einem Zeitpunkt während des Entladens von Stückgütern von der Ladefläche,
- Figur 7:: eine Seitenansicht eines Ausschnitts einer knicksteif verriegelbaren Bügelkette.

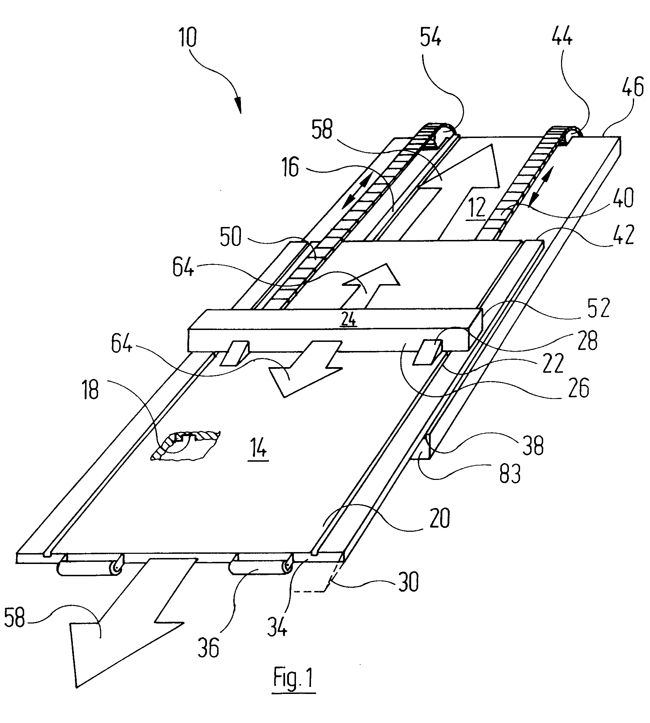

In Figur 1 sind die wichtigsten Elemente einer Ladeeinrichtung 10 dargestellt.

Die Ladeeinrichtung 10 umfaßt eine rechteckige Plattform 12, auf der ein Stückgutschieber 14 in Längsrichtung verschiebbar angeordnet ist, welcher durch flache Schienen 16 auf der Oberseite der Plattform 12 und flache Nuten 18 in der Unterseite des Stückgutschiebers 14 geführt ist.

Auf der Oberseite des Stückgutschiebers 14 sind in der Nähe der Längsränder Nuten 20 eingebracht. In diese greifen Führungsstücke 22 eines Abstreifers 24 ein, welcher somit in Längsrichtung des Stückgutschiebers 14 verschiebbar ist. An einem vorderen Ende 26 des Abstreifers 24 sind ansteigende keilförmige Nasen 28 angebracht, unter denen der Stückgutschieber 14 genauso wie unter dem Abstreifer 24 hindurch bewegbar ist.

Alternativ oder zusätzlich kann das vordere Ende 26 des Stückgutschiebers 14 als Rampenfläche ausgebildet sein, wie bei 30 gestrichelt angedeutet.

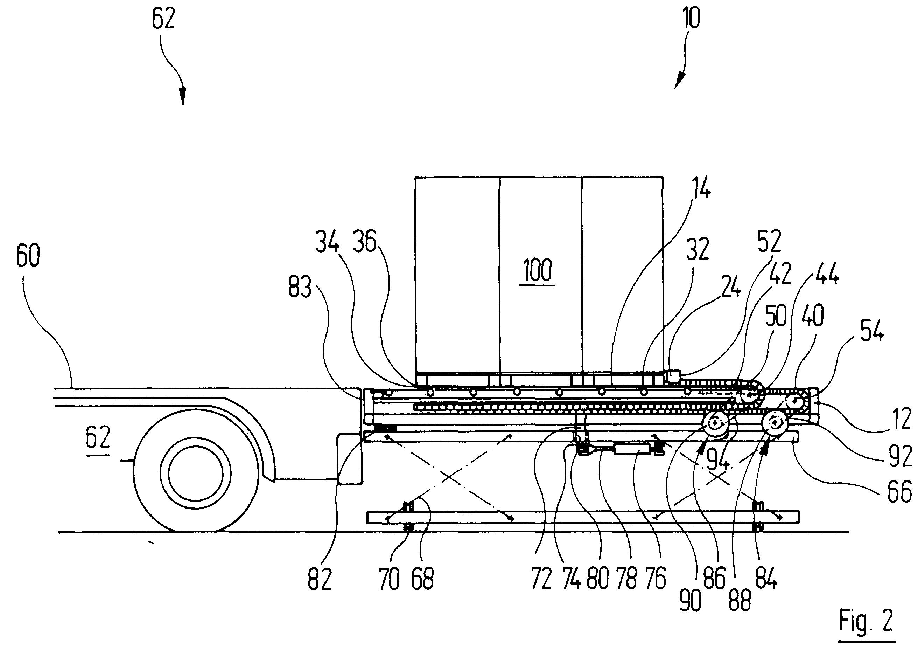

Der Stückgutschieber 14 ist auf der Plattform 12 über geringfügig über diese überstehende Rollen 32 (vgl. Figur 2) gelagert. Alternativ können die Rollen 32 von dem Stückgutschieber 14 geringfügig nach unten überstehend getragen sein, so daß die Oberfläche der Plattform 12 im wesentlichen glatt durchgehend ist.

An einem vorderen Ende 34 des Stückgutschiebers 14 sind zwei um eine kleine Strecke über die Unterseite des Stückgutschiebers 14 überstehende Rollen 36 angebracht. Damit ruht der Stückgutschieber 14 am vorderen Ende 34 auf den Rollen 36 und hinten auf den Rollen 32 der Plattform 12, die am vorderen Ende eine ballige obere Kante 38 oder eine geringfügig überstehende Rolle aufweist. Anstelle der Rollen 36 können auch Gleitkufen (nicht dargestellt) am vorderen Ende 34 des Stückgutschiebers 14 vorhanden sein.

Die Kraft zur Bewegung des Stückgutschiebers 14 wird von zwei Bügelketten 40 übertragen, deren treibende Enden an einem hinteren Ende 42 des Stückgutschiebers 14 befestigt sind, wobei zur Vereinfachung in Figur 1 nur eine der Bügelketten 40 dargestellt ist. Die zweite Bügelkette ist symmetrisch zur Längsmittelebene der Plattform 12 zu denken. Die Bügelketten 40 werden von je einem treibenden Umlenkrad 44 an einem hinteren Ende 46 der Plattform 12 nach unten umgelenkt.

Die Kraft zur Bewegung des Abstreifers 24 wird von zwei Bügelketten 50 übertragen, deren treibende Enden an einem hinteren Ende 52 des Abstreifers 24 befestigt sind, wobei in Figur 1 zur Vereinfachung nur eine der Bügelketten 50 dargestellt ist. Die Bügelketten 50 werden von je einem treibenden Umlenkrad 54 am hinteren Ende 46 der Plattform 12 analog zu den ersten Bügelketten 40 nach unten umgelenkt.

Bei den Bügelketten 40, 50 handelt es sich um Spezialketten, welche weiter unten genauer beschrieben sind.

Die möglichen Bewegungen des Stückgutschiebers 14 sind in Figur 1 durch Pfeile 58 angedeutet. Der Stückgutschieber 14 kann dabei auf eine Ladefläche 60 eines Lastwagens 62 (vgl. Figur 2) soweit vorgeschoben werden, bis sein vorderes Ende 34 an einem vorderen Ende der Ladefläche 60 des Lastwagens 62 liegt.

Die möglichen Bewegungen des Abstreifers 24 sind durch Pfeile 64 angedeutet. Der Abstreifer 24 kann mindestens soweit in Richtung des vorderen Endes 34 des Stückgutschiebers 14 verfahren werden, bis sein vorderes Ende 26 mit dem vorderen Ende 34 des Stückgutschiebers 14 bündig ist.

In den Figuren 2 bis 5 ist die Ladeeinrichtung 10 und die Ladefläche 60 des Lastwagens 62 dargestellt.

Die Plattform 12 ist schwenkbar auf einem verfahrbaren Hubtisch 66 befestigt, welcher mittels zweier in Figur 2 strichpunktiert angedeuteten Scherengestangen 68 und eines elektrischen Spindelantriebs (nicht dargestellt) höhenverstellbar ist. Die Scherengestänge 68 und mit ihnen die gesamte Ladeeinrichtung 10 sind auf Schienen 70 quer zur Längsachse der Ladeeinrichtung 10 verfahrbar.

Die Plattform 12 ist um die Achse eines zentralen Schwenkzapfens 72 gegenüber dem Hubtisch 66 schwenkbar. Der Schwenkzapfen 72 ist mit der Plattform 12 starr verbunden und wird in einer Lagerbohrung 74 im Hubtisch 66 aufgenommen. Die Schwenkbewegung wird von einem elektrischen Spindelantrieb 76 bewirkt, welcher am Hubtisch 66 befestigt ist und mit seiner Spindel 78 an einem am Schwenkzapfen 72 angebrachten Kurbelarm 80 angreift. Die Plattform 12 wird durch einen Satz von Kugel-Auflageeinheiten 82 im Bereich eines vorderen Endes 83 und des hinteren Endes 46 der Plattform 12 abgestützt.

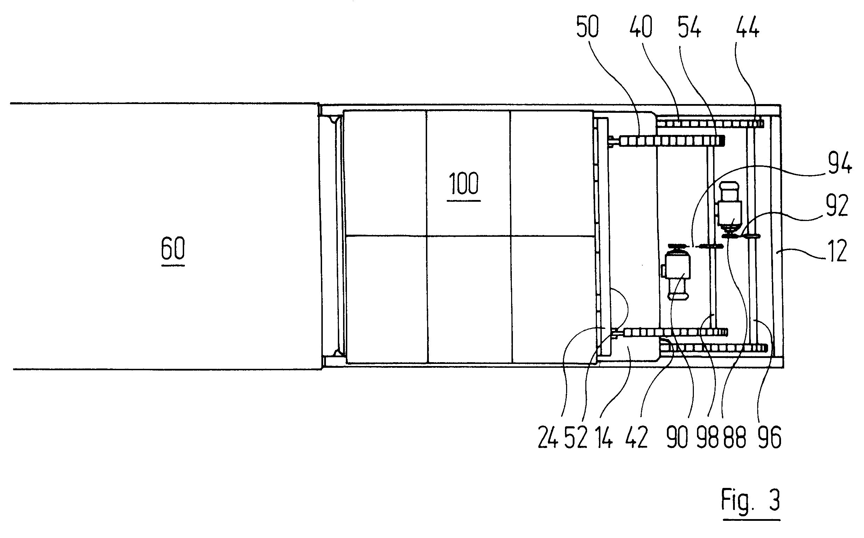

In Figur 2 und insbesondere in Figur 3 sind auch Antriebe 84, 86 für den Abstreifer 24 und den Stückgutschieber 14 dargestellt. Sie umfassen jeweils einen Elektromotor 88, 90, einen Kettentrieb 92, 94, eine Antriebswelle 96, 98 und die Umlenkräder 44, 54 für die Bügelkettenpaare 40, 50.

Auf dem Stückgutschieber 14 sind sechs Europaletten 100 in drei Reihen zu je zwei quer aufgestellten Paletten dargestellt. Alternativ können die Europaletten 100 auf dem quadratischen Stückgutschieber auch in zwei Reihen zu je drei Paletten in Längsausrichtung aufgestellt werden.

Der Ablauf eines Beladevorgangs wird nun anhand der Figuren 2 bis 5 erläutert:

Zunächst wird der zu beladende Lastwagen 62 mit seiner Ladefläche 60 an die Ladeeinrichtung 10 heranmanöveriert. Dann wird die Ladeeinrichtung 10 exakt hinter der Ladefläche 60 ausgerichtet, indem sie auf den Schienen 70 seitlich verfahren, mittels des Scherengestänges 68 in der Höhe verstellt und um den Schwenkzapfen 72 verdreht wird.

Die Europaletten 100 werden z.B. mit einem Gabelstapler vorzugsweise von der Seite her auf den Stückgutschieber 14 geladen, und zwar in der Anordnung, in der sie später auf der Ladefläche 60 des Lastwagens 62 stehen sollen.

Zu diesem Zeitpunkt befindet sich der Stückgutschieber 14 in einer zurückgefahrenen Position, d.h., sein vorderes Ende 34 liegt hinter dem vorderen Ende 83 der Plattform 12. Der größte Teil der Bügelketten 40, 50 befindet sich als waagerechte Trums, welche durch eine nicht dargestellte Führung abgestützt sind, innerhalb der Plattform 12.

Der Abstreifer 24 befindet sich vor dem Aufladen der Europaletten 100 in einer voll zurückgefahrenen Position, d.h., sein hinteres Ende 52 liegt beim hinteren Ende 42 des Stückgutschiebers 14.

Nachdem die Europaletten 100 aufgeladen sind, wird bei der hier beschriebenen Betriebsart der Elektromotor 90 entgegen dem Uhrzeigersinn (vgl. Figur 2) so lange betätigt, bis das Bügelkettenpaar 40 den Abstreifer 24 in Anlage an die Europaletten 100 gebracht hat. Dies kann aber auch unterbleiben.

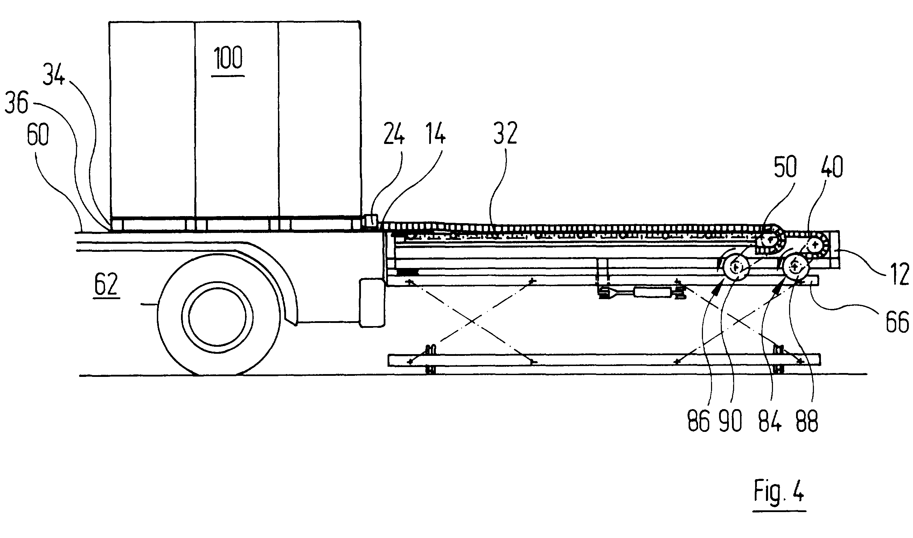

Nun werden die Elektromotoren 88, 90 gleichsinnig entgegen dem Uhrzeigersinn (vgl. Figur 4) so betätigt, daß der Stückgutschieber 14 und der Abstreifer 24 mit gleicher Geschwindigkeit in Richtung der Ladefläche 60 des Lastwagens 62 bewegt werden. Dabei verläßt der Stückgutschieber 14 mit seinem vorderen Ende 34 die Plattform 12 und gleitet auf die Ladefläche 60 des Lastwagens 62. Die leicht nach unten überstehenden Rollen 36 am vorderen Ende 34 des Stückgutschiebers 14 erleichtern dabei ein Überwinden von Unebenheiten auf der Ladefläche 60 des Lastwagens 62.

Sobald die Europaletten 100 auf dem Stückgutschieber 14 alle in den gewünschten Bereich der Ladefläche 60 des Lastwagens 62 bewegt sind, werden die Elektromotoren 88, 90 angehalten. Dieser Zustand ist in Figur 4 dargestellt. Die waagerechten Trums der Bügelkettenpaare 40, 50 liegen nun fast vollständig auf der Plattform 12 bzw. auf den Rollen 32.

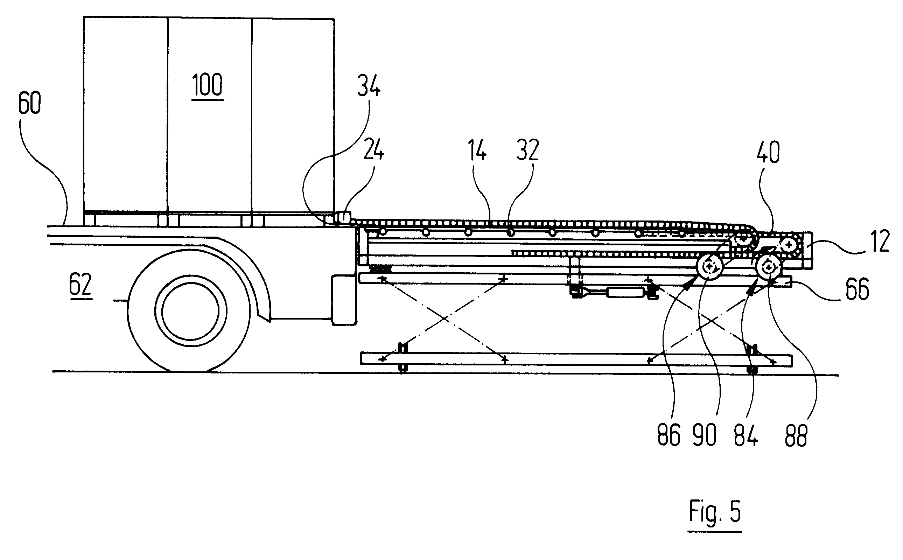

Nun beginnt das Abstreifen der Ladung vom Stückgutschieber 14: Hierzu wird der Elektromotor 88 im Uhrzeigersinn (vgl. Figur 5) betätigt, so daß sich der Stückgutschieber 14 wieder auf die Plattform 12 zurückbewegt. Gleichzeitig wird jedoch der Elektromotor 90 des Abstreifers 24 über eine Bremse (nicht dargestellt) blockiert, falls er nicht selbsthemmend ist. Somit bleibt der Abstreifer 24 in einer festen Position. Die Europaletten 100 bleiben hierdurch ebenfalls in ihrer Position, während der Stückgutschieber 14 von den Bügelketten 40 unter ihnen weggezogen wird, bis er von den Europaletten 100 vollständig frei ist und diese direkt auf der Ladefläche 60 des Lastwagens 62 stehen. Dieser Zustand ist in Figur 5 dargestellt.

Stückgutschieber 14 und Abstreifer 24 können nun wieder in ihre Ausgangspositionen zurückgefahren werden, welche sie zu Beginn des Beladevorgangs einnahmen. Damit ist der Beladevorgang dieses Satzes von Europaletten 100 beendet.

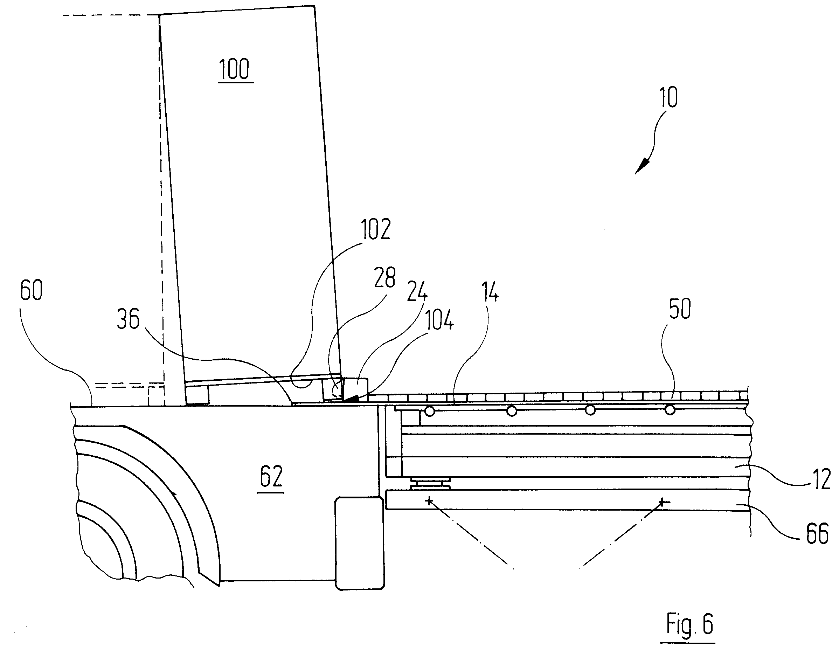

Der Ablauf eines Entladevorganges wird nun anhand der Figur 6 erläutert. In dieser ist der Übergangsbereich zwischen Ladeeinrichtung 10 und Lastwagen 62 vergrößert dargestellt.

Beim Entladevorgang werden der Stückgutschieber 14 und der Abstreifer 24 zunächst bis an eine vorderste der zu entladenden Palettenreihen 100 herangefahren. Beim Heranfahren des Abstreifers 24 bis zur Anlage an die vorderste Palettenreihe 100 schieben sich die an dem Abstreifer 24 angebrachte Nasen 28 unter Palettenböden 102 und kippen die Paletten 100 hierdurch leicht nach hinten, so daß sich zwischen den Paletten 100 und der Ladefläche 60 ein Spalt 104 bildet.

Alternativ kann das Anheben der Paletten 100 auch durch eine am Abstreifer 24 angebrachte vertikal verfahrbare Gabel bewirkt werden, die durch eine Hubeinrichtung betätigt wird.

Nun wird der Stückgutschieber 14 in den Spalt 104 hinein und unter die Palette 100 bewegt. Sobald eine Palette 100 auf dem Stückgutschieber 14 steht, wird der Stückgutschieber 14 gemeinsam mit dem Abstreifer 24 mit der daraufstehenden Palettenreihe 100 nach hinten von der Ladefläche 60 gezogen.

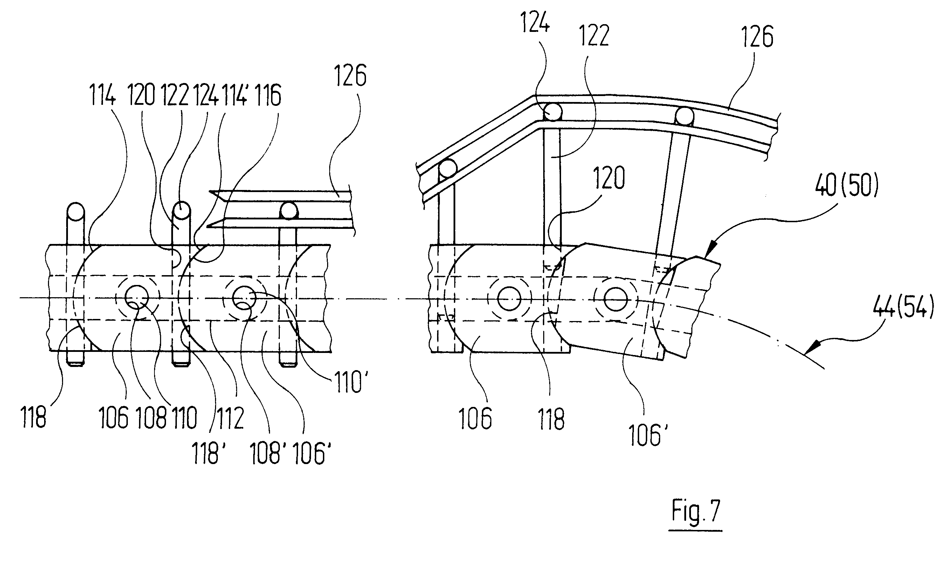

Nun werden anhand der Figur 7 die Bügelketten 40, 50 näher erläutert:

Die Bügelketten 40, 50 umfassen hochbelastbare prismatische Kettenglieder 106, welche jeweils eine transversale Bohrung 108 für die Aufnahme eines Bolzens 110 aufweisen. Die Bolzen 110 und die Bohrungen 108 bilden die Gelenke der Bügelketten 40, 50. Die Kettenglieder 106 sind über Laschenelemente 112, in welche jeweils zwei benachbarte Bolzen 110, 110' eingreifen, miteinander verbunden.

Die Kettenglieder 106 sind jeweils auf einer Stirnfläche 114 zylindrisch konvex und auf einer gegenüberliegenden Stirnfläche 116 passend zylindrisch konkav ausgebildet, so daß die Stirnflächen 114, 116 zueinander komplementär sind. Die Zylinderachse der konvexen Stirnfläche 114 eines Kettengliedes 106 fällt mit der Achse seiner transversalen Bohrung 108 zusammen. Die Zylinderachse der konkaven Stirnfläche 116 eines betrachteten Kettengliedes 106 fällt mit der Achse der transversalen Bohrung 108' eines benachbarten Kettengliedes 106' zusammen. Die konvexe Stirnfläche 114 weist an ihrer höchsten Stelle eine in ihrer Mittelebene liegende, senkrecht zur Längsachse verlaufende und kreisbogenförmige Querschnittskontur aufweisende Nut 118 auf.

Senkrecht zu den transversalen Bohrungen 108 ist in jedem Kettenglied 106 eine in der Glied-Mittelebene liegende Bohrung 120 vorgesehen, welche die konkave Stirnfläche 116 durchschneidet und zusammen mit der Nut 118' des benachbarten Kettengliedes 106' bei gestreckter Kette 40, 50 eine durchgehende Verriegelungsbohrung bildet. In diese kann ein Verriegelungsbolzen 122 bewegt werden, welcher einen T-förmigen Kopf 124 aufweist.

Bei eingeführten Verriegelungsbolzen 122 stellen die Bügelketten 40, 50 somit starre Stangen dar.

Das Entriegeln der Bügelketten 40, 50 in den Bereichen der Umlenkräder 44, 54 wird nun beispielhaft an zwei benachbarten Kettengliedern 106, 106' erläutert. Die Bewegungsrichtung zum Entriegeln der Bügelketten 40, 50 ist in Figur 7 von links nach rechts zu denken.

Links der Umlenkräder 44, 54, wo die Bügelketten 40, 50 in gerader Linie ausgerichtet sind, befindet sich der Verriegelungsbolzen 122 aufeinanderfolgender Kettenglieder 106, 106' bündig in der durch die Bohrung 120 und die Nut 118' des benachbarten Kettengliedes 106' gebildeten Verriegelungsbohrung. Hierdurch wird ein Verschwenken der aufeinanderfolgenden Kettenglieder 106, 106' relativ zueinander um die Achse der transversalen Bohrung 108' verhindert, die beiden Kettenglieder 106, 106' sind also starr miteinander verbunden.

Unmittelbar vor dem Umlenkrad 44, 54 läuft der T-förmige Kopf 124 des Verriegelungsbolzens 122 in eine Steuerschiene 126, welche um das Umlenkrad 44 bzw. 54 herum angeordnet ist. Die Steuerschiene 126 ist so geformt, daß sich der Abstand zwischen den Kettengliedern 106, 106' und der Steuerschiene 126 linear vom unmittelbar vor dem Umlenkrad 44 bzw. 54 liegenden Bereich bis zum Bereich des Umlenkrades 44, 54 vergrößert. Beim Passieren dieses Abschnittes der Steuerschiene 126 wird der Verriegelungsbolzen 122 soweit aus der Bohrung 120 herausgezogen, daß die Nut 118' des benachbarten Kettengliedes 106' von ihm freikommt und die starre Verbindung der beiden benachbarten Kettenglieder 106, 106' aufgehoben ist.

Das Verriegeln der Bügelketten 40, 50 erfolgt im Vergleich zum Entriegeln in genau umgekehrter Reihenfolge (in Figur 7 also von rechts nach links) und ist hier nicht noch einmal im Detail beschrieben.

## Patentansprüche

1. Einrichtung zum Laden und Entladen von Stückgütern (100) auf bzw. von einer Ladefläche (60), dadurch gekennzeichnet, daß sie einen verfahrbaren Stückgutschieber (14) zum Tragen eines, vorzugsweise mehrerer Stückgüter (100) und einen unabhängig von diesem in gleicher Richtung verfahrbaren Abstreifer (24) aufweist.

2. Einrichtung nach Anspruch 1, dadurch gekennzeichnet, daß der Stückgutschieber (14) und/oder der Abstreifer (24) über eine Kettenanordnung (40, 50) bewegbar sind.

3. Einrichtung nach Anspruch 2, dadurch gekennzeichnet, daß die Kettenglieder (106) knicksteif miteinander verbindbar sind.

4. Einrichtung nach Anspruch 3, dadurch gekennzeichnet, daß aufeinanderfolgende Kettenglieder (106, 106') durch zwischen einer Verriegelungsstellung und einer Freigabestellung verschiebbare Verriegelungsbolzen (122) knicksteif miteinander verbindbar sind, welche mit Verriegelungsbohrungen zusammenarbeiten, die zum Teil (120) in einem betrachteten Kettenglied (106), zum Teil (118) in einem benachbarten Kettenglied (106') ausgebildet sind.

5. Einrichtung nach Anspruch 4, dadurch gekennzeichnet, daß Köpfe (124) der Verriegelungsbolzen (122) so ausgebildet sind, daß sie mit einer mindestens teilweise längs des Weges der Kettenanordnung (40, 50) angeordneten Steuereinrichtung (126) zusammenarbeiten, um sie zwischen der Verriegelungstellung und der Freigabestellung zu verschieben.

6. Einrichtung nach einem der Ansprüche 3 bis 5, dadurch gekennzeichnet, daß die Stirnflächen (114', 116) der Kettenglieder (106', 106) unter Druckbelastung reibschlüssig miteinander verbunden sind.

7. Einrichtung nach einem der vorhergehenden Ansprüche, dadurch gekennzeichnet, daß der Stückgutschieber (14) und/oder der Abstreifer (24) durch einen Hydraulikantrieb oder einen elektrischen Antrieb bewegbar sind.

8. Einrichtung nach einem der vorhergehenden Ansprüche, dadurch gekennzeichnet, daß der Stückgutschieber (14) und der Abstreifer (24) auf einer verstellbaren Plattform (12) angeordnet sind.

9. Einrichtung nach Anspruch 8, dadurch gekennzeichnet, daß die Plattform (12) höhenverstellbar ist.

10. Einrichtung nach einem der Ansprüche 8 oder 9, dadurch gekennzeichnet, daß die Plattform (12) um eine vertikale Achse (72) drehbar ist.

11. Einrichtung nach einem der Ansprüche 8 bis 10, dadurch gekennzeichnet, daß der Stückgutschieber (14) auf der Plattform (12) und der Abstreifer (24) auf dem Stückgutschieber (14) geführt (16, 18, 20, 22) ist.

12. Einrichtung nach einem der vorhergehenden Ansprüche, dadurch gekennzeichnet, daß der Stückgutschieber (14) an seinem vorderen Ende (34) mindestens eine Rolle (36) umfaßt.

13. Einrichtung nach einem der Ansprüche 8 bis 12, dadurch gekennzeichnet, daß der Stückgutschieber (14) über Rollen (32) mit der Plattform (12) zusammenarbeitet.

14. Einrichtung nach einem der vorhergehenden Ansprüche, dadurch gekennzeichnet, daß am Abstreifer (24) am vorderen Ende (26) und/oder am Stückgutschieber (14) am vorderen Ende (34) keilförmig zum freien Ende abfallende Nasen (28) vorgesehen sind.

15. Einrichtung nach einem der vorhergehenden Ansprüche, dadurch gekennzeichnet, daß am vorderen Ende (26) des Abstreifers (24) eine durch eine Hubeinrichtung vertikal bewegbare Gabel angeordnet ist, welche die Stückgüter (100) mindestens um die Dicke des Stückgutschiebers (14) von der Ladefläche (60) anheben kann.

16. Verfahren zum Laden und Entladen von Stückgütern (100) auf bzw. von einer Ladefläche (60) unter Verwendung einer Ladeeinrichtung (10) nach einem der Ansprüche 1 bis 14, dadurch gekennzeichnet, daß
a) zum Aufladen der Stückgüter (100) auf die Ladefläche (60)
aa) Stückgüter (100) auf einen hinter der Ladefläche (60) stehenden Stückgutschieber (14) gestellt werden,
ab) der Stückgutschieber (14) und ein Abstreifer (24) gemeinsam auf die Ladefläche (60) bewegt werden,
ac) der Abstreifer (24) ortsfest gehalten wird, während der Stückgutschieber (14) von der Ladefläche (60) zurückgefahren wird,
ad) der Abstreifer (24) zurückgefahren wird,
b) zum Entladen von Stückgütern von der Ladefläche (60)
ba) der Abstreifer (24) gegen die hintersten Stückgüter gefahren wird,
bb) die hintersten Stückgüter (100) durch den Abstreifer (24) zumindest am hinteren Ende leicht angehoben werden,
bc) der Stückgutschieber (14) unter die letzten Stückgüter (100) gefahren wird,
bd) der Stückgutschieber (14) und der Abstreifer (24) zusammen von der Ladefläche (60) bewegt werden.
